# EUROPEAN PATENT SPECIFICATION

(11) **EP 0 517 697 B1**
(45) Date of publication and mention of the grant of the patent: **30.11.1994**
(21) Application number: 90913075.9
(22) Date of filing: 31.08.1990
(51) Int. Cl.: B65G 1/04, B65G 63/00

(54) **COMPACT, HIGH DENSITY STORAGE OF CARGO CONTAINERS**
KOMPAKTE HOCHDICHTE LAGERUNG VON FRACHTCONTAINERN
SYSTEME DE STOCKAGE TRES DENSE ET D'ENCOMBREMENT MINIMAL POUR CONTENEURS

(30) Priority: 02.03.1990 US 487615
(43) Date of publication of application: 16.12.1992
(73) Proprietor: COMPUTAINER SYSTEMS INC., Vancouver British Columbia V6A 3L2 (CA)
(72) Inventor: COATTA, Bernard, Joseph, New Westminster, Brit. Columbia V3M 6h1 (CA); HARGREAVES, John, Edward, Pitt Meadows, British Columbia V3Y 2H4 (CA); COATTA, Terry, James, Richmond, British Columbia V7E 2W5 (CA)
(74) Representative: Perani, Aurelio
(86) International application number: CA9000281
(87) International publication number: WO9113011

(56) References cited:
- CH-A- 496 598
- DE-B- 1 212 879
- US-A- 3 547 282
- US-A- 3 630 402

## Description

### Field of the Invention

This application pertains to the storage of cargo containers in a multi-level rack capable of horizontally displaceably receiving multiple containers on each level under programmed control.

### Background of the Invention

CH-A-496,598, Sarvary, demonstrates a threedimensional pallet storage system wherein goods are stored on pallets at a plurality of different storage levels and in a plurality of rows of storage locations at each level. Sarvary therefore pertains to pallets which are typically moved by fork-lift trucks. A pallet storage system is not identical to a container storage system. In Sarvary, the pallets are removed from an area of bulk storage by means of a transfer trolley and conveyed to a pallet replenishment area. A picking tower is located adjacent a live storage area and has associated therewith a two-dimensional transfer device capable of removing pallets from the live storage area, to a point adjacent a handler, transferring the pallet after unloading of goods in a direction normal to the direction of removal and then removing the pallet in the opposite direction from the removal direction to insert the pallet in an empty row of the live storage area. The transfer trolley and two-directional transfer device both have at least one cross travel member to effect the transfer of the pallets from one storage location to another.

CH-A-496,598 and its counterpart US-A-3,622,020 also teaches the interconnection or coupling of pallets in the same rack row so that withdrawal of a pallet from a rack row moves as a train all the pallets of the row and likewise the insertion of a pallet in a row displaces or pushes all the pallets of the row.

The proposed coupling devices are in form of a shaped hooks or angled channel members provided at both ends of each pallet.

To reduce frictional resistance when pallets are being moved into and out of the storage locations the storage racks are preferably provided with rollers or roller chains or in alternative the pallets themselves may be provided with rollers.

Decoupling of the interconnection requires removal of the hooks or movement of the pallets in a direction transverse to the rows or by raising or lowering the pallet to be removed/inserted as to the others.

This operation adds to the other handling operations and increase their time.

Moreover movement of a pallet involves direct interaction with the other pallets of the row with possible shocks among pallets.

Inbound cargo shipping containers are conventionally unloaded from container ships by cranes and transported by container carrying vehicles into a dockside container storage yard. The same cranes and vehicles are used to transport outbound containers from the container yard and load them onto container ships for export.

If the container yard is large relative to the number of containers which must be stored then the containers are laid on the ground in rows. If the container yard is small relative to the number of containers which must be stored (as is typically the case) then the containers are stacked atop one another to conserve valuable space.

Containers stored in the yard are commonly shuffled from one location to another in a continuous effort to speed the loading and unloading of container ships. For example, a group of containers may be moved to clear an area in the yard to receive an inbound shipload of containers. The inbound containers can be unloaded and moved into the cleared common storage area more quickly than would be the case if each inbound container had to be moved into a random storage location in the yard. Similarly, a group of outbound containers may be moved into a precleared yard storage area in preparation for loading the entire group of outbound containers onto a ship which is about to arrive, or which is being unloaded. The outbound containers can be loaded onto the ship from a common storage area more quickly than would be the case if each outbound container had to be moved to the ship from a random storage location in the yard.

The continuous shuffling of stored containers causes a number of problems. Although records are usually kept of the yard location in which each newly arriving container is stored, those records are often not updated to reflect every shuffling movement of each container. For example, if an outbound container is stacked beneath two other containers which are not outbound, then those two must be lifted off the outbound container and moved to another storage location before the outbound container can be moved. The other two containers are not normally moved back into the stack location from which they were moved. Moreover, the operator who moves them may not note their new location(s) in the yard's records. Even though those two containers may be moved only a short distance, confusion can result when they have to be located for loading or for transport to an outbound ship, especially if they are repeatedly moved in a series of unrelated shuffling operations. Time is thus wasted while "lost" containers are located.

The ability to manage container movements is also adversely affected by the inability to precisely locate and track the movement of individual containers within the yard. Even if a container's location is known, repeated shuffling operations may have "buried" that container beneath and/or behind many other containers, all of which must be moved (i.e. shuffled) to gain access to the desired container. Repeated container shuffling also increases the potential far damaging the containers.

Computerized systems have been developed to automate the process of locating and tracking individual containers stored within a container yard. However, because such systems typically rely on human driven vehicles to move containers, they require human operator input to indicate that containers have been shuffled into different locations. Such systems are therefore subject to the same problems outlined above if the operator fails to input information respecting each and every container movement. In a busy container yard, with many simultaneous container movements continually ongoing, it is impractical to record each and every container movement. Even if the location of every container in the yard is known, and even if every container movement is tracked to reflect the new location of every shuffled container, significant time is still required for conventional container handling equipment to shuffle the containers about the yard and transport them to and from container ships.

The present invention provides a compact, high density container storage apparatus which facilitates precise location of every stored container; precise tracking of every container movement; and, controllable container shuffling capable of significantly reducing the time required to move selected containers between container ships and the container storage apparatus.

### Summary of the Invention

The invention provides a multi-level container storage rack. A container transport aisle extends through the rack from top to bottom and between opposed ends of the rack. A plurality of container storage positions are provided on each of the levels and on each side of the aisle. A container elevator means is provided for vertically displacing containers within the aisle to a selected one of the levels. A container transfer means is also provided for transferring containers between the container elevator means and a selected side of the selected level. The storage positions on each side of the aisle are preferably horizontally displaceable toward or away from the aisle, along each of the levels.

The container transfer means horizontally transfers inbound containers from the container elevator means onto the selected side of the selected level. Storage positions on each side of the aisle are interconnected (in endless loop fashion) such that transfer of a container from the container elevator horizontally displaces, away from the aisle, containers previously transferred onto the side of the level to which the container is transferred. In other words, the container transfer means horizontally transfers the container from the elevator into a storage position adjacent the aisle on a selected side of the selected level, which in turn horizontally displaces all other storage positions on the selected side of the selected level one storage position away from the aisle, thanks to the interconnection of the storage positions in endless loop fashion.

Thus the storage position must be intended as the combination of a space which may receive the volume of the container and displacing hardware which moves such space and possibly the container located therein. The displacing hardware of each storage position in the same level and aisle side is interconnected is endless loop fashion, such as it may be provided by endless belt, chain, or mechanically interconnected sliding rollers.

Spaced apart containers in the same row, thanks to such interconnection are concurrently moved without any linking or interaction of the containers among them.

In other words the container storage position from one another whilst being interconnected may be considered as spaced from one another and horizontally dispaceable by such interconnection contrarily to the teaching of CH-A-496,598 where it is a moving pallet which displaces all other pallets of the same row.

The container transfer means horizontally transfers outbound containers from the selected side of the selected level onto the container elevator means. Slidable transfer of a container from a selected side of a selected level onto the elevator horizontally displaces, toward the aisle, containers remaining on the selected side of the selected level. In other words, the container transfer means horizontally transfers the container from a storage position adjacent the aisle on a selected side of a selected level onto the elevator, which in turn horizontally displaces all other storage positions on the selected side of the selected level one storage position towards the aisle.

Thus the present invention, as defined in claim 1, relates to a container storage apparatus as set forth in the appended claims and comprising a multilevel container storage rack, a container transport aisle, extending alongside said rack from top to bottom and between opposed ends of said rack, a plurality of container storage positions on each of said levels, container elevator means for vertically displacing containers within said aisle to a selected one of said levels and container transfer means for transferring container between said container elevator means and said selected level, said container storage positions being arranged according to the first-in first-out storage principle, characterized in that the storage positions are horizontally displaceable, towards or away from said aisle along each of said levels and in that said storage position on each level are interconnected each to the other in endless loop fashion, whereby slidable transfer of a container into a storage position adjacent said aisle, horizontally displaces, by said storage position interconnection, all containers in said selected level one storage position away from said aisle, and whereby removal of a container from a storage position adjacent said aisle, horizontally displaces by said storage position interconnection, all containers on said selected level, one storage position towards said aisle, thereby ensuring that a container on a storage position and a given level will always be adjacent said aisle.

### Brief Description of the Drawings

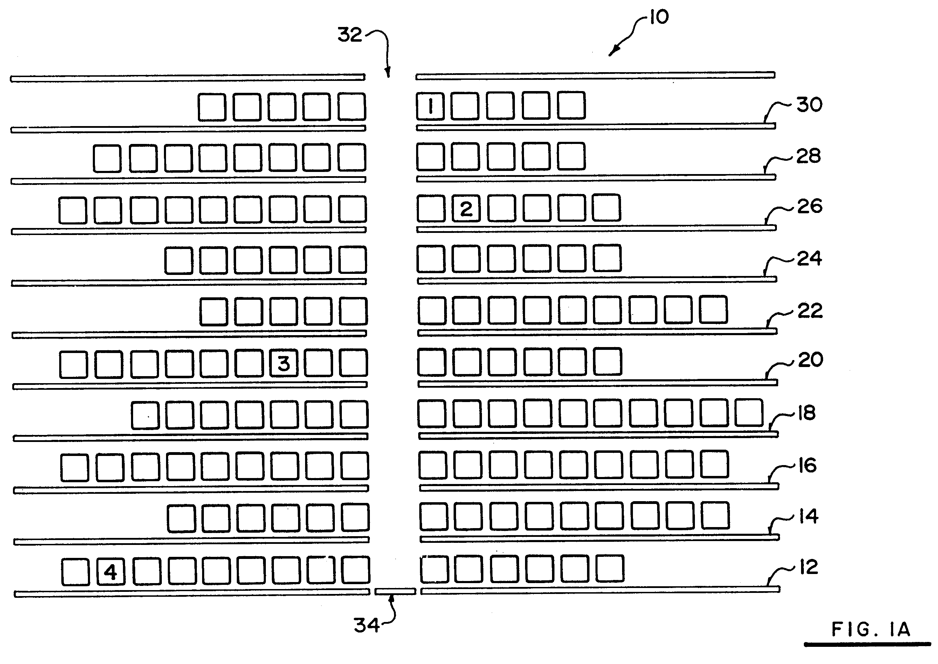

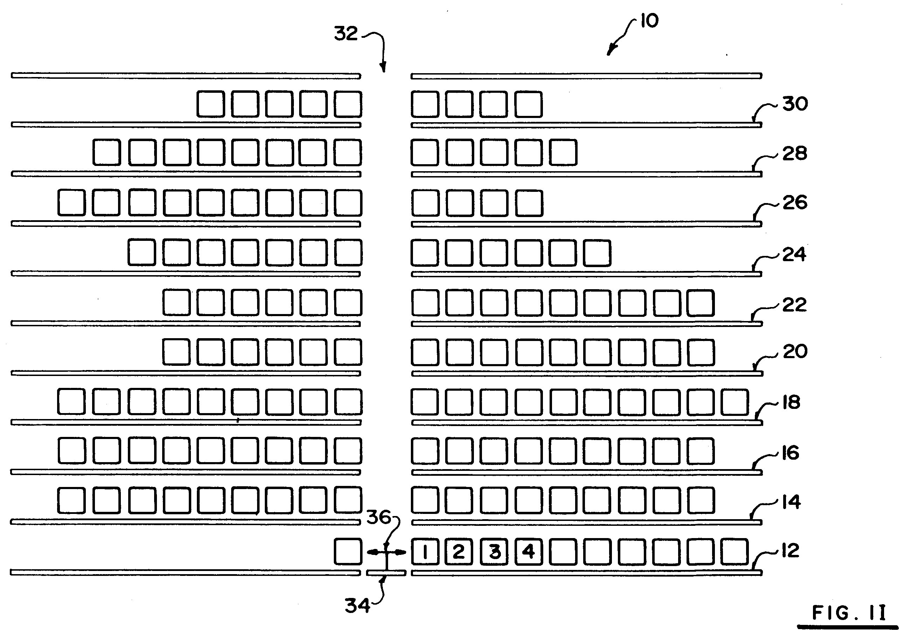

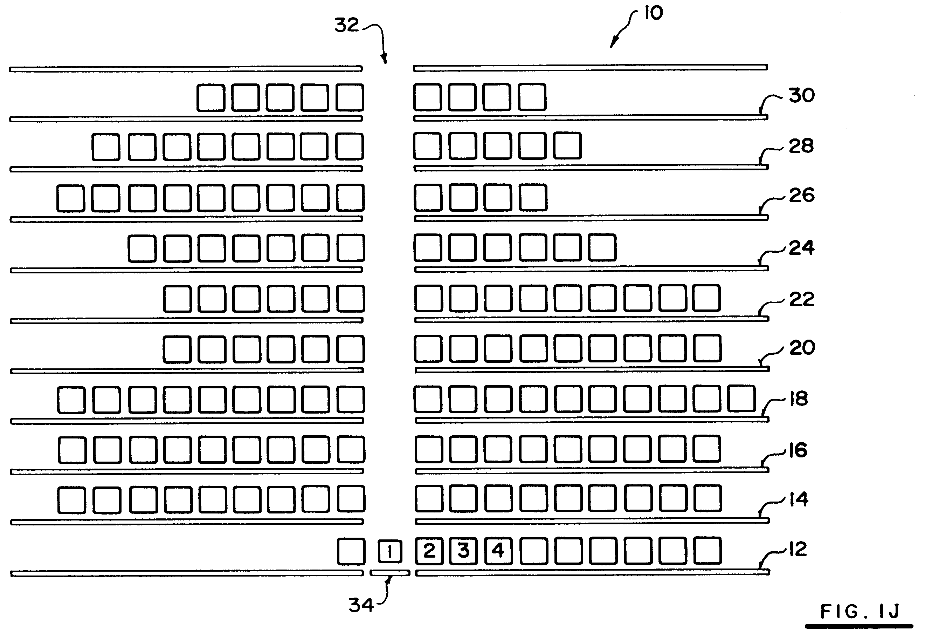

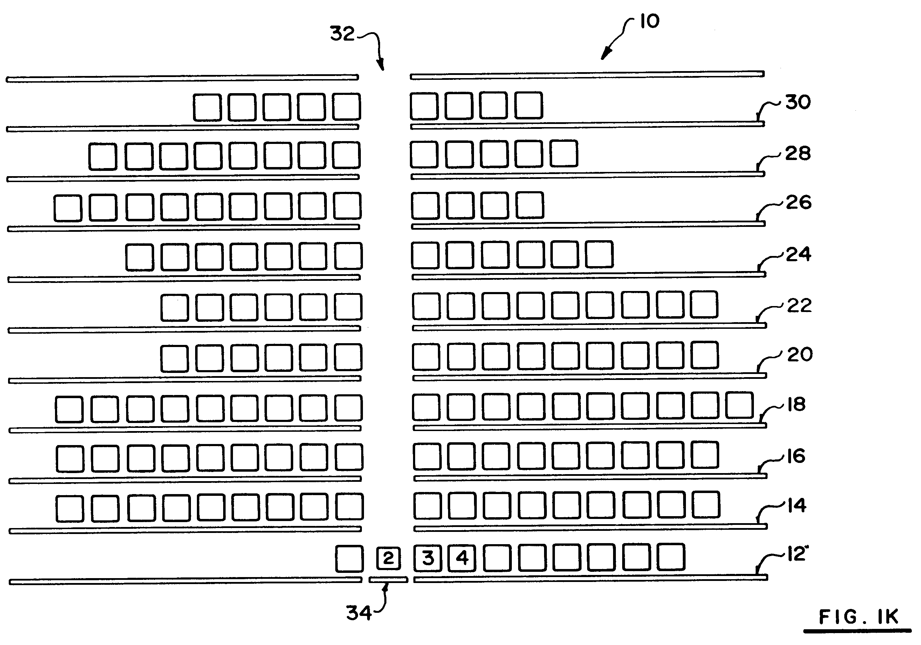

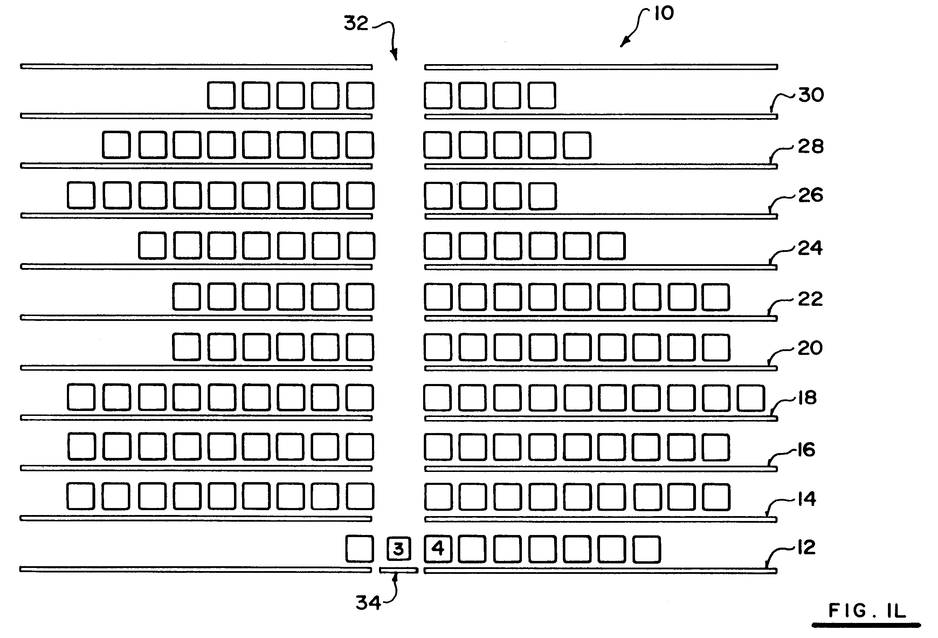

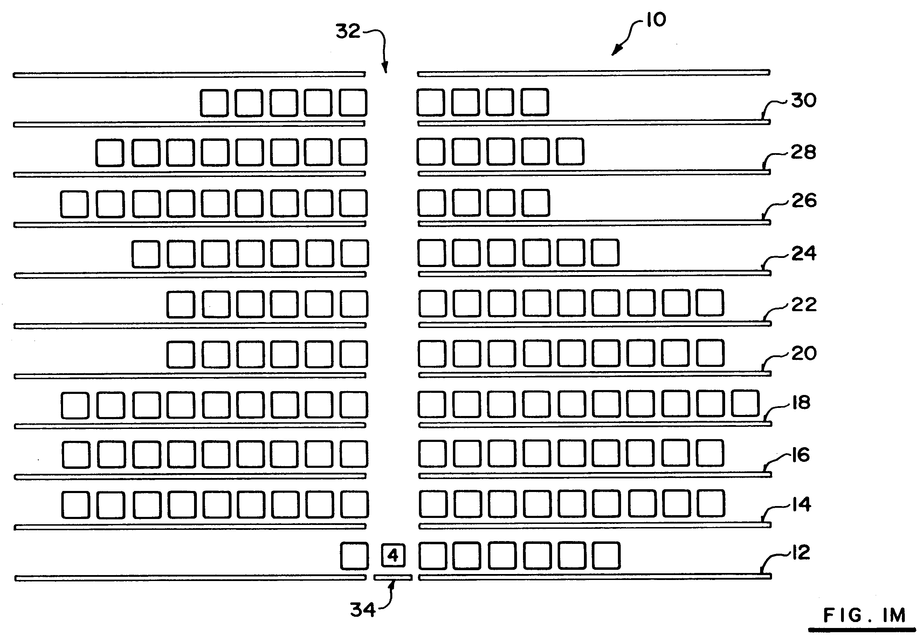

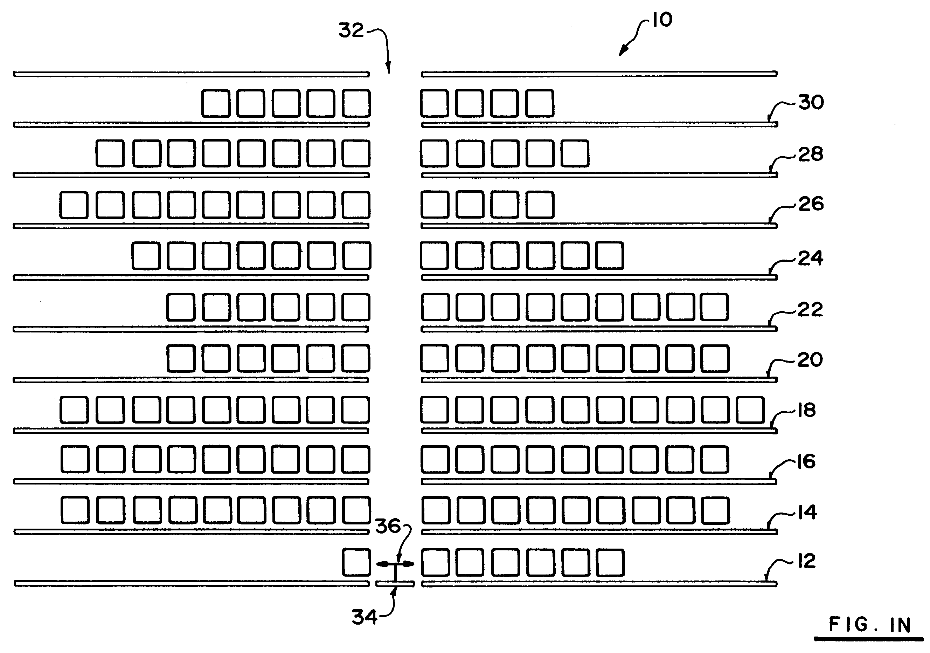

Figures 1(a) through 1(n) are elevation views showing one end of a cargo container storage apparatus constructed in accordance with the preferred embodiment of the invention and depicting the sequence of steps by which four selected containers may be retrieved from storage for transportation to a container ship.

### Detailed Description of the Preferred Embodiment

The drawings depict a container storage rack 10 having multiple levels 12 through 30. A suitably anchored framework (not shown) supports rack 10 and containers stored therein. A container transport aisle 32 extends through rack 10 from top to bottom and between opposed ends of rack 10. A plurality of container storage positions are provided on each of levels 12 through 30, on both sides of aisle 22. Rectangles depict the ends of containers stored in individual storage position within rack 10. Empty storage positions in rack 10 are denoted by the absence of rectangles at the outer ends of levels 12 through 30, on either side of aisle 32.

A container elevator means such as a powered hoist, container spreader, crane or elevator 34 is mounted in aisle 32 for vertically displacing containers within aisle 32 to a selected one of levels 12 through 30. A container tranfer means such a double acting hydraulic cylinder 36 is mounted on elevator 34 for transferring containers between elevator 34 and a selected side of a selected one of levels 12 through 30. The adjacent storage positions on each side of aisle 32 are spaced from one another and are interconnected in endless loop fashion so that the storage positions on each side may be horizontally displaced collectively toward or away from side aisle 32, along each of levels 12 through 30.

Double acting cylinder 36 horizontally transfers inbound containers from elevator 34 onto a selected side of a selected one of levels 12 through 30. Transfer of a containers from elevator 34 horizontally displaces, away from aisle 32, containers previously transferred onto the same side and level of rack 10 to which the inbound container is transferred. More particularly, double acting cylinder 36 horizontally transfers the inbound container from elevator 34 into a storage position adjacent aisle 32 on a side and level of rack 10 selected for storage of the inbound container. Because the storage positions are interconnected as aforesaid, transfer of the inbound container from elevator 34 frees a storage position adjacent aisle 32 to receive the inbound container by horizontally displacing, one storage position away from aisle 32, all other storage position on the side and level of rack 10 selected for storage of the inbound container.

Double acting cylinder 36 horizontally transfers outbound containers onto elevator 34 from storage positions adjacent aisle 32. Transfer of an outbound container onto elevator 34 horizontally displaces, toward aisle 32, any containers remaining on the same side and level from which the outbound container was transferred. More particularly, double acting cylinder 36 horizontally transfers the outbound container from its storage position adjacent aisle 32 onto elevator 34. Because the storage positions are interconnected as aforesaid, transfer of the outbound container onto elevator 34 does not leave an empty storage position adjacent aisle 32. Instead, transfer of the outbound container onto elevator 34 horizontally displaces, one storage position toward aisle 32, all other storage positions on the side and level of rack 10 from which the outbound container is withdrawn, by dragging the entire group of storage positions (together with any containers stored therein) toward aisle 32 as the outbound container is transferred onto elevator 34. Accordingly, any containers remaining on the same side and level from which the outbound container was transferred remain adjacent one another, with the innermost container immediately adjacent aisle 32.

The operation of elevator 34 and double acting cylinder 36 may be programmed to store, retrieve, and/or shuffle containers in any desired fashion. For example, Figures 1(a) through 1(n) depict one possible sequence of steps by which four outbound containers labelled 1, 2, 3 and 4 previously stored in rack 10 in the positions shown in Figure 1(a) may be retrieved for transportation to a container ship. As will be seen, the outbound containers are initially moved into a contiguous
group of storage positions on the right hand side of level 12 immediately adjacent aisle 32. The contiguously grouped outbound containers are then sequentially transferred into aisle 32 onto container carrying vehicles which transport the containers to the container ship. Those skilled in the art will recognize that this enables the container yard personnel to plan and schedule container movements with considerable flexibility. For example, outbound containers may be contiguously grouped well before the ship is ready to receive them. As soon as the ship is ready the containers may be transferred to the ship rapidly and efficiently. As will be seen, the exact position of every stored container is always known, notwithstanding complex shuffling of containers stored within rack 10.

The following description illustrates how outbound containers 1 through 4 may be contiguously pregrouped so that they may be sequentially delivered, in ascending numeric order, to the container ship. It will however be understood that the outbound containers need not be grouped before they are delivered to the ship, although grouping will speed the container transfer operation, as aforesaid. It will also be understood that the outbound containers may be grouped in any desired sequence.

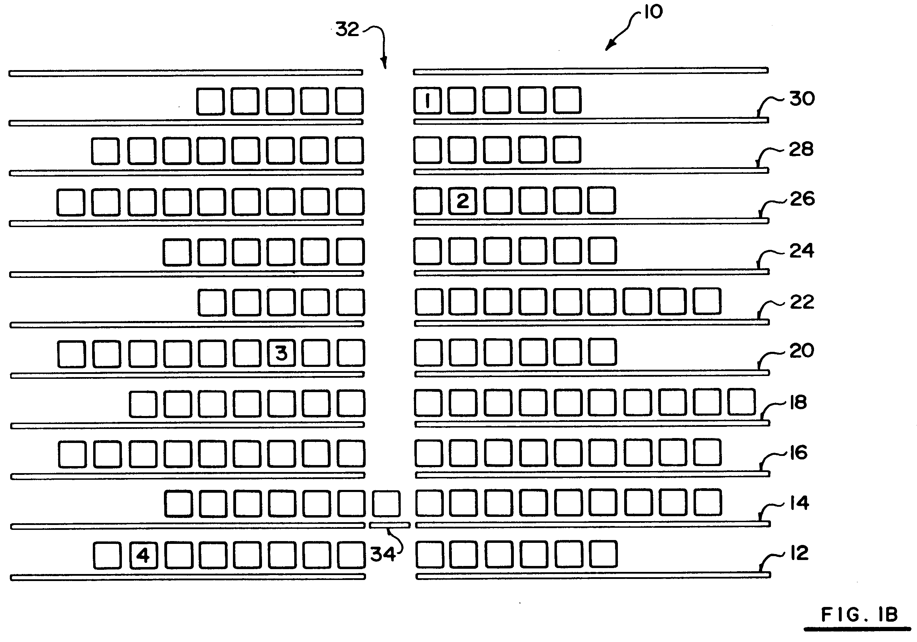

Container 4 is "buried" on level 12, on the left side of aisle 32, behind seven "static" containers which are to remain in storage. The seven static containers must be shuffled into other storage positions in rack 10 in order to bring container 4 adjacent aisle 32 so that it may be transferred to the grouping area (which, for the purposes of this example, is the right hand side of level 12 immediately adjacent aisle 32). As may be seen by comparing Figures 1(a) and 1(b), the static container adjacent aisle 32 is transferred onto elevator 34 and lifted to level 14. Withdrawal of the static container from the left side of level 12 horizontally displaces (i.e. drags) all of the containers remaining on the left side of level 12 one storage position toward aisle 32. A suitably programmed computer tracks the movement of each container. When the static container aforesaid is withdrawn from level 12 as aforesaid, the computer updates its records to indicate that the containers remaining on the left side of level 12 have moved one storage position toward aisle 32

When the static container has been lifted to level 14, as depicted in Figure 1(b), double acting cylinder 36 horizontally displaces the container to the left, storing it on the left side of level. The static containers previously stored on the left side of level 14 are displaced one storage position away from aisle 32. The computer again updates its records to indicate that the containers previously stored on the left side of level 14 have moved one storage position away from aisle 32; and, that the static container withdrawn from level 12 has moved into the storage position on the left side of level 14 immediately adjacent aisle 32.

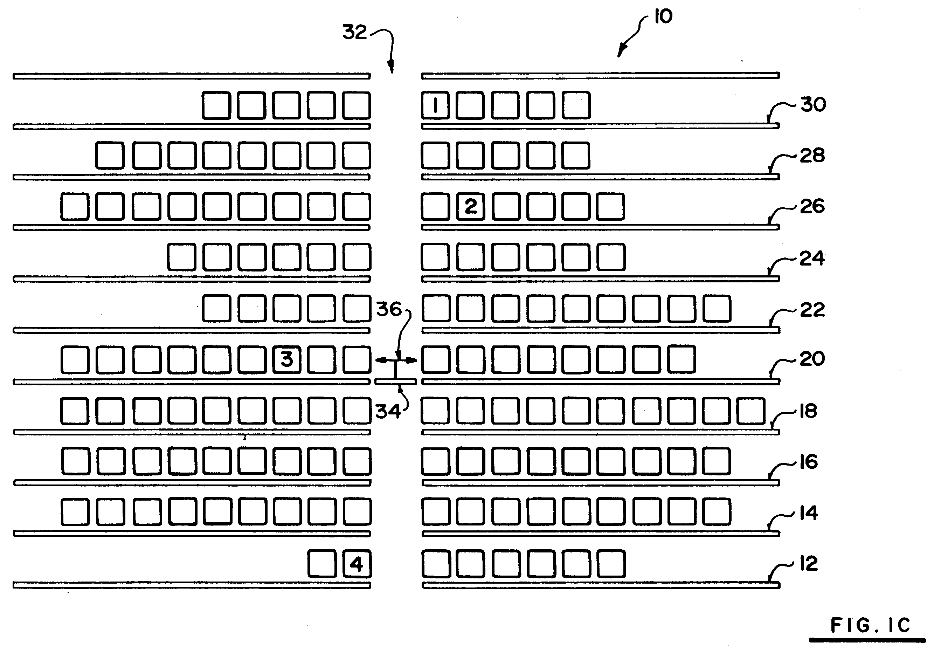

As may be seen by comparing Figures 1(a) and 1(c), the remaining six static containers behind which container 4 is buried are similarly sequentially shuffled from the left side of level 12 into other static storage positions on the left side of level 14, the left side of level 18 and the right side of level 20 to bring container 4 into position immediately adjacent aisle 32 on the left side of level 12, as shown in Figure 1(c). As each container is withdrawn from or inserted into a storage position, the computer updates its records to reflect the new position of that container and all other containers displaced therewith.

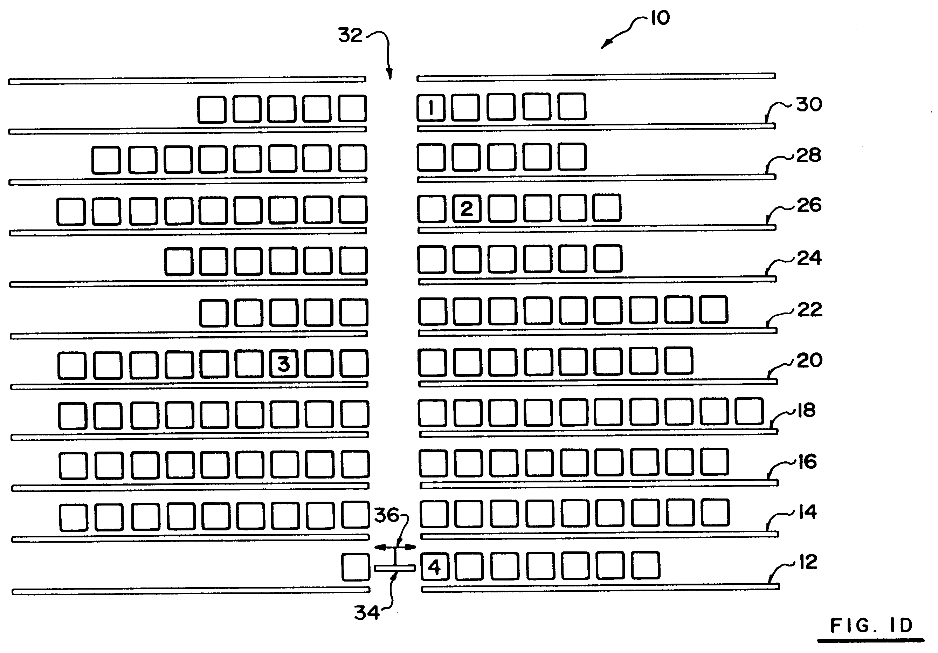

As may be seen by comparing Figures 1(c) and 1(d), container 4 is transferred onto elevator 34 from its position adjacent aisle 32 on the left side of level 12 and then immediately transferred from elevator 34 into the position adjacent aisle 32 on the right side of level 12. Container 4 is thus stored within the previously defined grouping area.

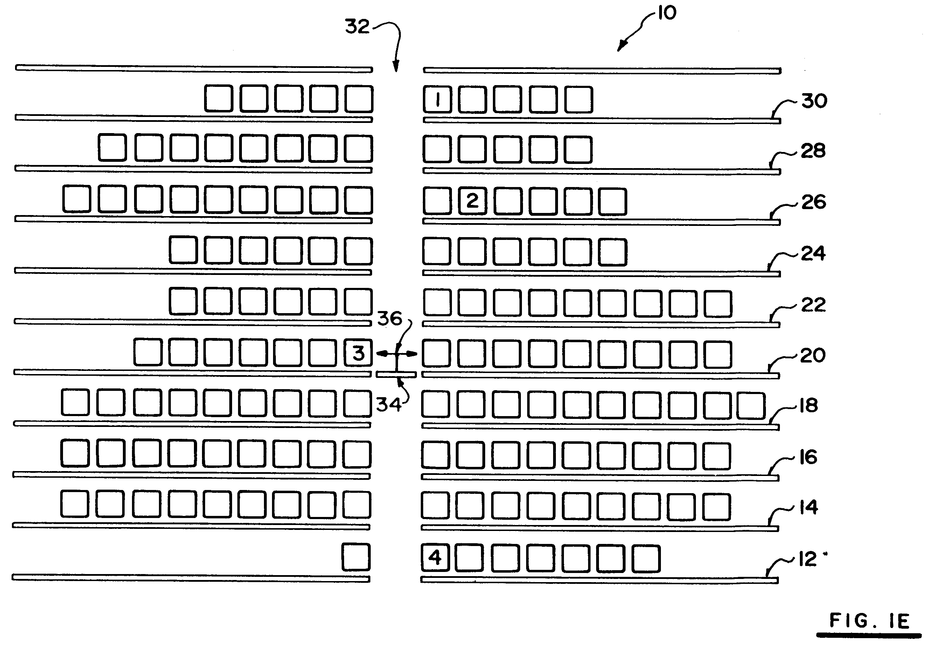

Container 3 is buried on level 20, on the left side of aisle 32, behind two static containers which are to remain in storage. The two static containers must be shuffled into other storage positions in rack 10 in order to bring container 3 adjacent aisle 32 so that it may be transferred to the grouping area. As may be seen by comparing Figures 1(d) and 1(e), the two static containers behind which container 3 is buried are sequentially shuffled from the left side of level 20 into other static storage positions on the right side of level 20 and the left side of level 22, to bring container 3 into position immediately adjacent aisle 32 on the left side of level 20. As each container is withdrawn from or inserted into a storage position, the computer updates its records to reflect the new position of that container and all other containers displaced therewith.

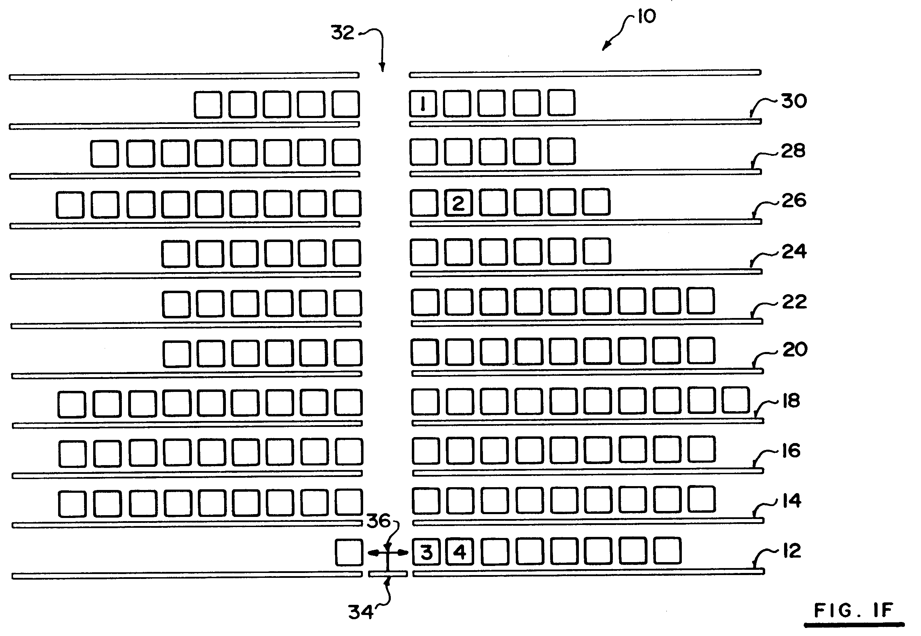

As may be seen by comparing Figures 1(e) and 1(f), container 3 is transferred onto elevator 34 from its position adjacent aisle 32 on the left side of level 20, lowered to level 12, and then transferred from elevator 34 into the position adjacent aisle 32 on the right side of level 12, displacing container 4 and the other static containers on the right side of level 12 one storage position away from aisle 32. Containers 3 and 4 are thus stored within the grouping area.

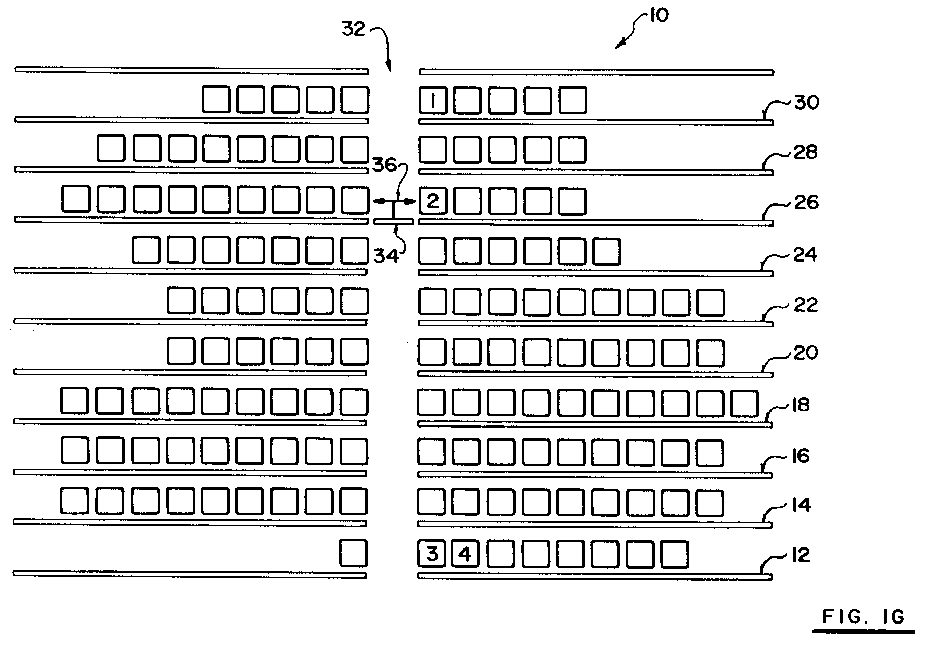

Container 2 is buried on level 26, on the left side of aisle 32, behind one static container which is to remain in storage. That static container must be shuffled into another storage position in rack 10 in order to bring container 2 adjacent aisle 32 so that it may be transferred to the grouping area. As may be seen by comparing Figures 1(f) and 1(g), the static container behind which container 2 is buried is shuffled from the right side of level 26 into another static storage position on the left side of level 24, to bring container 3 into position immediately adjacent aisle 32 on the right side of level 26. The computer again updates its records to reflect the new position of each shuffled container and all other containers displaced therewith.

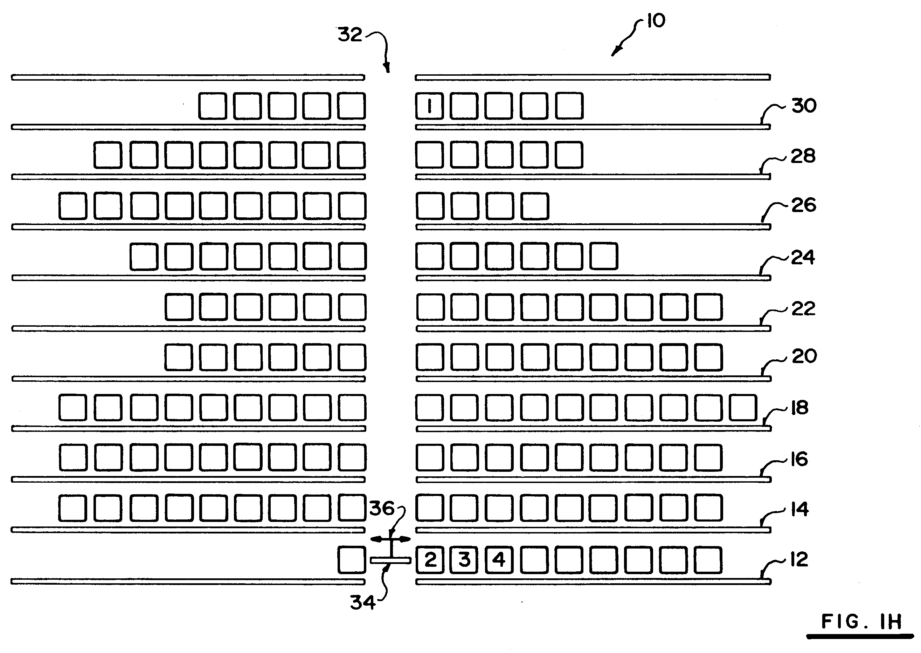

As may be seen by comparing Figures 1(g) and 1(h), container 2 is transferred onto elevator 34 from its position adjacent aisle 32 on the right side of level 26, lowered to level 12, and then transferred from elevator 34 into the position adjacent aisle 32 on the right side of level 12, displacing containers 3 and 4 and the other static containers on the right side of level 12 one storage position away from aisle 32. Containers 2, 3 and 4 are thus stored within the grouping area.

Container 1 is not buried, but is already adjacent aisle 32 so it may be directly transferred to the grouping area without first shuffling any static containers. As may be seen by comparing Figures 1(h) and 1(i), container 1 is transferred onto elevator 34 from its position adjacent aisle 32 on the right side of level 30, lowered to level 12, and then transferred from elevator 34 into the position adjacent aisle 32 on the right side of level 12, displacing containers 2, 3 and 4 and the other static containers on the right side of level 12 one storage position away from aisle 32. Containers 1, 2, 3 and 4 are thus stored within the grouping area. The computer again updates its records to reflect the new position of each transferred container and all other containers displaced therewith.

When the container ship (not shown) is ready to receive the outbound containers, four conventional container carrying vehicles (not shown) are driven to rack 10. Aisle 32, elevator 34 and double acting cylinder 36 are constructed to allow the container carrying vehicles to pass through aisle 32 and to allow double acting cylinder 36 to transfer containers from rack 10 to the container carrying vehicles.

The first container carrying vehicle is driven into one end of aisle 32 and stopped adjacent container 1. Double acting cylinder 36 transfers container 1 from the grouping area to the first container carrying vehicle, which is then driven out through the opposite end of aisle 32 to the ship, as depicted graphically in Figure 1(j). The computer then updates its records to reflect the fact that container 1 is no longer in storage, and to reflect the new storage positions of containers 2, 3 and 4 and the other static containers stored on the right side of level 12, all of which are horizontally displaced one storage position toward aisle 32 as container 1 is transferred to the first container carrying vehicle.

As the first container carrying vehicle exits aisle 32 with container 1, the second container carrying vehicle is driven into aisle 32 and stopped adjacent container 2, which is now adjacent aisle 32, as may be seen in Figure 1(j). Double acting cylinder 36 transfers container 2 from the grouping area to the second container carrying vehicle, which is then driven out through the opposite end of aisle 32 to the ship, as depicted graphically in Figure 1(k). The computer again updates its records to reflect the fact that container 2 is no longer in storage, and to reflect the new storage positions of containers 3 and 4 and the other static containers stored on the right side of level 12, all of which are horizontally displaced one storage position toward aisle 32 as container 2 is transferred to the second container carrying vehicle.

As graphically depicted in Figures 1(l) and 1(m), containers 3 and 4 are similarly sequentially transferred to the third and fourth container carrying vehicles respectively and driven to the ship. Figure 1(n) depicts rack 10 after the four outbound containers have been removed, with the remaining static containers in storage.

Roughly 5% of the container storage positions available within rack 10 should be left vacant at all times to ensure that containers may be shuffled with reasonable flexibility.

As will be apparent to those skilled in the art in the light of the foregoing disclosure, many alterations and modifications are possible in the practice of this invention without departing from the spirit or scope thereof. For example, aisle 32 need not divide rack 10 into left and right halves, as depicted in the drawings. Instead, the aisle may be on one side or the other of rack 10, with no container storage levels on the opposite side of the aisle. It is however expected that greater container storage capacity and more efficient container shuffling and grouping capability will be attained by providing container storage levels on both sides of aisle 32. As another example, the apparatus may be extended, to provide additional container storage capacity and greater shuffling and grouping flexibility, by placing a plurality of multi-level storage racks identical to rack 10 side by side such that aisle 32 extends longitudinally through the entire group of racks.

The operation of elevator 34 and double acting cylinder 36 may be programmed for storage, retrieval and/or shuffling of containers in any desired fashion. Containers may be grouped in any desired manner to expedite their transfer between rack 10 and the container ship(s). For example, containers may be grouped according to their destination port, their outbound shipping dates, their ports of origin, or any other desired parameter. The programming may also be optimized, with the aid of known queuing and programming techniques, to minimize the displacement of elevator 34, or to maximize the speed of the shuffling operation as containers are stored, retrieved and/or shuffled into groups. Accordingly, the scope of the invention is to be construed in accordance with the substance defined by the following claims.

## Claims

1. Container storage apparatus comprising a multilevel container storage rack (10), a container transport aisle (32) extending alongside said rack (10) from top to bottom and between opposed ends of said rack (10), a plurality of container storage positions on each of said levels (12-30), container elevator means (34) for vertically displacing containers within said aisle (32) to a selected one of said levels (12-30), and container transfer means (36) for transferring containers between said container elevator means (34) and said selected level (12-30), said container storage positions on each side of said aisle being arranged according to the first-in first-out storage principle, characterized in that the container storage positions are horizontally displaceable, toward or away from said aisle (32), along each of said levels, wherein said storage positions on each level are interconnected each to the other in endless loop fashion whereby slidable transfer of said container (1,2,3 or 4) into a storage position adjacent said aisle (32) horizontally displaces by said interconnection all containers on said selected level one storage position away from said aisle (32), and whereby removal of a container (1,2,3 or 4) from storage position adjacent said aisle (32) horizontally displaces by said interconnection all containers on said selected level one storage position towards said aisle, thereby ensuring that a container (1,2,3 or 4) on a storage position on a given level will always be adjacent said aisle (32).

2. Container storage apparatus as defined in claim 1, wherein said storage position are spaced from one another.

3. Container storage apparatus as defined in claim 1 or 2 wherein a multi-level container storage rack (10) is located on each side of the aisle (32).

4. Container storage apparatus as defined in claim 3 wherein said container transfer means (36) is adapted to horizontally transfer containers (1,2,3 or 4) from said container elevator means (32) onto said selected side of said selected level (12-30).

5. Container storage apparatus as defined in claim 4, wherein said container transfer means (36) is adapted to horizontally transfer containers from said selected side of said selected level onto said container elevator means.

## Patentansprüche

1. Vorrichtung zum Lagern von Containern, mit einem mehrstöckigen Container-Lagergestell (10), einem Container-Transport-Korridor (32), der sich längsseits des Gestelles (10) von oben nach unten und zwischen sich gegenüberliegenden Seiten des Gestelles (10) erstreckt, mehreren Container-Lagerpositionen auf jedem der Stockwerke (12-30), einer Container-Hubvorrichtung (34) zum vertikalen Verschieben von Containern innerhalb des Korridores (32) zu einem ausgewählten Stockwerk (12-30), einer Container-Übergabevorrichtung (36) zum Übergeben von Containern zwischen der Containern-Hubvorrichtung (34) und dem ausgewählten Stockwerk (12-30), wobei die Container-Lagerpositionen auf jeder Seite des Korridores gemäß dem first-in first-out Lagerprinzip angeordnet sind,
**dadurch gekennzeichnet,**
daß die Container-Lagerpositionen hin zum oder weg vom Korridor (32) längs jedes Stockwerkes horizontal bewegbar sind, wobei die Lagepositionen in jedem Stockwerk miteinander nach Art einer Endlosschleife verbunden sind, wobei die gleitende Übergabe eines Containers (1, 2, 3 oder 4) in eine an den Korridor (32) angrenzende Lagerposition durch diese Verbindung alle Container in dem Stockwerk horizontal um eine Lagerungs-Position weg von dem Korridor (32) verschiebt, und wobei das Entfernen eines Containers (1, 2, 3 oder 4) von einer an den Korridor (32) angrenzenden Lagerposition durch diese Verbindung alle Container in dem Stockwerk horizontal um eine Lagerposition hin zu dem Korridor verschiebt, wodurch sichergestellt ist, daß immer ein Container (1, 2, 3 oder 4) in einer Lagerposition in einem bestimmten Stockwerk an den Korridor (32) angrenzt.

2. Vorrichtung zum Lagern von Containern gemäß Anspruch 1,
wobei die Lagerpositionen voneinander beabstandet sind.

3. Vorrichtung zum Lagern von Containern gemäß Anspruch 1 oder 2,
wobei auf jeder Seite des Korridors (32) ein mehrstöckiges Container-Lagergestell (10) angeordnet ist.

4. Vorrichtung zum Lagern von Containern gemäß Anspruch 3,
wobei die Container-Übergabevorrichtung (36) Container (1, 2, 3 oder 4) von der Container-Hubvorrichtung (32) auf die ausgewählte Seite des ausgewählten Stockwerkes (12-30) horizontal übergibt.

5. Vorrichtung zum Lagern von Containern gemäß Anspruch 4,
wobei die Container-Übergabevorrichtung (36) Container von der ausgewählten Seite des ausgewählten Stockwerkes auf die Container-Hubvorrichtung horizontal übergibt.

## Revendications

1. Appareil de stockage de conteneurs comportant un râtelier (10) de stockage de conteneurs à plusieurs niveaux, une allée (32) de transport de conteneurs s'étendant le long d'un côté dudit râtelier (10) du haut jusqu'en bas et entre des extrémités opposées dudit râtelier (10), plusieurs positions de stockage de conteneurs sur chacun desdits niveaux (12-30), dos moyens élévateurs de conteneurs (34) destinés à déplacer verticalement des conteneurs dans ladite allée (32) juaqu'à l'un, choisi, desdits niveaux (12-30), et des moyens (36) de transfert de conteneurs destinés à transférer des conteneurs entre lesdits moyens élévateurs (34) de conteneurs et ledit niveau choisi (12-30), lesdites positions de stockage de conteneurs sur chaque côté de ladite allée étant agencées conformément au principe d'emmagasinage premier entré, premier sorti, caractérisé en ce que les positions de stockage de conteneurs peuvent être déplacées horizontalement, rapprochées ou éloignées de ladite allée (32), le long de chacun desdits niveaux, dans lequel lesdites positions de stockage sur chaque niveau sont reliées entre elles à la manière d'une boucle sans fin de manière qu'un transfert par glissement dudit conteneur (1, 2, 3 ou 4) jusque dans une position de stockage adjacente à ladite allée (32) déplace horizontalement, par ladite liaison, tous les conteneurs sur ledit niveau choisi en les éloignant d'une position de stockage de ladite allée (32), et de manière que l'enlèvement d'un conteneur (1, 2, 3 ou 4) de la position de stockage adjacente à ladite allée (32) déplace horizontalement, par ladite liaison, tous les conteneurs sur ledit niveau choisi, d'une position de stockage vers ladite allée, assurant ainsi qu'un conteneur (1, 2, 3 ou 4) sur une position de stockage sur un niveau donné est toujours adjacent à ladite allée (32).

2. Appareil de stockage de conteneurs selon la revendication 1, dans lequel lesdites positions de stockage sont espacées les unes des autres.

3. Appareil de stockage de conteneurs selon la revendication 1 ou 2, dans lequel un râtelier (10) de stockage de conteneurs à plusieurs niveaux est placé sur chaque côté de l'allée (32).

4. Appareil de stockage de conteneurs selon la revendication 3, dans lequel lesdits moyens (36) de transfert de conteneurs sont conçus pour transférer horizontalement des conteneurs (1, 2, 3 ou 4) depuis lesdits moyens (32) élévateurs de conteneurs jusque sur ledit côté choisi dudit niveau choisi (12-30).

5. Appareil de stockage de conteneurs selon la revendication 4, dans lequel lesdits moyens (36) de transfert de conteneurs sont conçus pour transférer horizontalement des conteneurs depuis ledit côté choisi dudit niveau choisi jusque sur lesdits moyens élévateurs de conteneurs.
